Europäisches Patentamt

European Patent Office

Office européen des brevets

(19)

(11) Publication number: **0 097 635**

**A2**

(12) # EUROPEAN PATENT APPLICATION

(21) Application number: **83870059.9**

(22) Date of filing: **15.06.83**

(51) Int. Cl.³: **F 03 D 9/00**

(30) Priority: 17.06.82 BE 208370
03.06.83 BE 210933

(43) Date of publication of application:
04.01.84 Bulletin 84/1

(84) Designated Contracting States:
AT CH DE FR GB IT LI LU NL SE

(71) Applicant: Vandervelden, Etiene
Lindeken 38
B-1650 Beersel(BE)

(72) Inventor: Vandervelden, Etiene
Lindeken 38
B-1650 Beersel(BE)

(74) Representative: Pieraerts, Jacques et al,
Bureau Gevers S.A. rue de Livourne 7, Bte. 1
B-1050 Bruxelles(BE)

(54) Device for producing heat energy from a windmill or wind-turbine.

(57) There is described a device for producing heat energy and simultaneously auto-regulating the speed of a windmill or wind-turbine, which comprises a water brake or hydraulic brake mounted on the rotating shaft of a windmill or wind-turbine, which brake is comprised of a cylinder-shaped body (1), at least one rotor (16) mounted on said rotating shaft (2), and a stator (15) mounted about said rotating shaft (2), adjacent to said rotor (16).

Croydon Printing Company Ltd.

EP 0 097 635 A2

"Device for producing heat energy from a windmill or wind-turbine".

The object of the invention is to provide a device for producing heat energy and simultaneously auto-regulating the speed of a windmill or wind-turbine. More particularly the invention relates to a device the structural components of which are simple to manufacture, are extremely reliable in operation, and provide besides a very high heat efficiency by Joule's action, also the possibility of obtaining an auto-regulating action on the speed of the windmill or wind-turbine.

An important object of the invention is thus to use the available energy for other uses than heat production (sawing, painting, generating electricity, etc.).

For this purpose according to the invention, the device according to the invention, comprises a water brake or hydraulic brake which is mounted on the rotating shaft of a wind-turbine or windmill, which brake is comprised of a cylinder-shaped body, at least one rotor mounted on said shaft, and a stator mounted about said rotating shaft next to said rotor, an amount of liquid inside said cylinder-shaped body which lies approximately level with the rotor, a pump on said rotating shaft remaining immerged in said liquid, an adjustable inlet from a liquid tank for said liquid, to the cylinder-shaped body, and an adjustable outlet for said liquid to said tank, in such a way that said rotor and stator lie between said inlet and outlet, and finally two branches on said cylinder-shaped body to lead the heated liquid to at least one heat exchanger and return the cooled liquid to the cylinder-shaped body.

According to a possible embodiment of the invention, said rotor lies above said stator.

In another embodiment of the invention, said rotor lies below said stator.

A feature of the invention lies in that underneath the lowermost component (rotor or stator) is provided a plate which allows the passage along the circumference thereof of the circulating liquid, while on said rotating shaft is mounted a pump which forces said liquid to flow through said rotor and stator as well as along the circumference of said plate.

In another possible embodiment, on said rotating shaft is provided a second rotor and a second stator cooperates with a second plate which is connected to said second rotor.

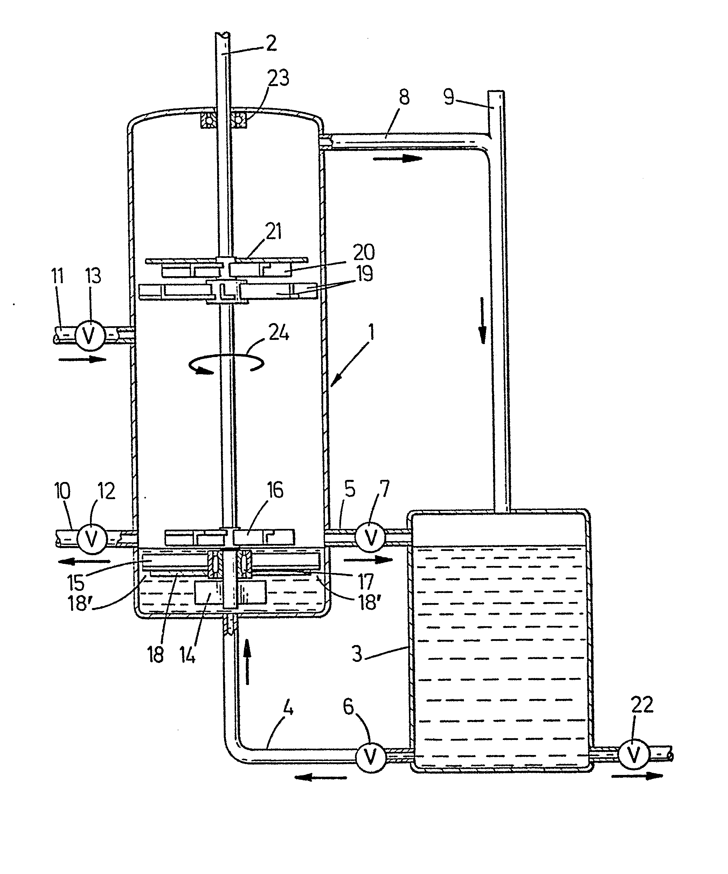

Other details and features of the invention will stand out from the following description, given by way of non limitative example and with reference to the accompanying drawing, the single figure of which is a diagrammatic lengthwise section through the device according to the invention.

The device as shown comprises a liquid tank 1 and a vertical rotating shaft 2 mounted therein.

The cylinder-shaped body encloses an amount of liquid which is fed from a tank 3, an inlet 4 for said liquid, and an outlet 5, with an adjusting cock 6 on the inlet 4 and an adjusting cock 7 on the outlet 5. As shown in the drawing, the liquid level inside the cylinder-shaped body 1 lies somewhat below the outlet 5 which connects the cylinder-shaped body 1 and the tank 3.

At the top thereof said cylinder-shaped body 1 is provided with a return pipe 8 for returning the liquid to said tank 3. A venting channel 9 branches off from said return pipe 8.

On the wall of said cylinder-shaped body 1 are provided two branchings 10 and 11 with adjusting cocks 12 and 13 respectively. Said branching 10 feeds the heated liquid to at least one heat exchanger, while said branching 11 forms the return line for the cooled liquid from a heat-storage unit or steam-producing unit.

But said branching 10 is arranged tangentially relative to said cylinder-shaped body to maximize the pump action with the revolution direction of said rotor and pump. For the same reasons said same branching 10 is arranged level with the rotor 16.

On said rotating shaft 2 is mounted a pump 14 which due to the revolution of the rotating shaft 2, forces the liquid through a stator 15 and a rotor 16. Said stator 15 bears in the center thereof a ball or roller bearing 17 for said rotating shaft 2. The stator 15 bears on a plate 18 which forms the top part of the housing of said pump 14. Over the circumference thereof, said plate 18 has a series openings 18' which make it possible for the liquid to pass through in the direction of the stator 15.

Both the stator and the rotor may ad- vantageously be comprised of radially-arranged angle-irons. Said angle-irons are so arranged in the rotor and stator as to have the vertical flange of each angle-iron lie in front of the horizontal flange thereof, when considering the revolution direction of the rotating shaft 2.

In the device as shown in the figure are further provided a second stator 19, a second rotor 20, and a second plate 21.

Said components lie in the uppermost half of said cylinder-shaped body 1. Each rotor and stator is formed by a number of L sections. A rotor is preferably comprised of eight radially-directed L sections, while the stator is formed preferably by six L sections, which are also radially-directed. In each said components, the L section from the uppermost component lies with the vertical flange thereof directed downwards and consequently the vertical flange of the lowermost component is directed upwards. The uppermost rotor 20 is preferably of larger size than the lowermost rotor 16.

Said plate 18 fulfills in the embodiment as shown in the figure, a threefold function :

- it forms part of the pump housing;
- it bears the stator 15;
- it also bears the ball or roller bearing 17.

A plate 21 rotates together with rotor 20 and forms a unit therewith.

Finally a drain-cock for the tank 3 is shown in 22.

The liquid which is heated by friction (Joule's action) may be comprised of water or oil, or any liquid means which is suitable for this purpose.

Various possible operating conditions will be explained hereinafter, mainly according to the opening and closing of said cocks 6 and 7. Said possible conditions are as follows :

1°) Cock 6 is closed. In such condition, the wind-turbine rotates freely. Said wind-turbine may then, when the rotating shaft is fitted with the required apparatus, generate for instance exclusively electricity. No heating by Joule's action of that liquid present inside said cylinder-shaped body 1 does then occur.

2°) Cock 6 is open and cock 7 remains closed.
The windmill is braked-down. The Joule's action inside the liquid is maximum for a given wind-turbine speed. In such position of cocks 6 and 7, the cocks 12 and 13 are preferably open, whereby the liquid being heated inside said cylinder-shaped body 1 is fed to a heat exchanger or a steam-generating unit.

The cooled liquid returns through the return line 11 and cock 13, to the device cylinder-shaped body 1.

3°) Cocks 6 and 7 lie in a position which may be thought of as an intermediate position. A pre-determined speed of the wind-turbine is dependent on the position of both said cocks 6 and 7. The device may for example generate little heat due to said Joule's action, while the rotating shaft may be used for other purposes.

4°) Cocks 6 and 7 are closed, while cocks 12 and 13 remain open.
Due to a pre-selected liquid level inside the cylinder-shaped body 1, the wind-turbine will go on rotating also at a pre-determined rate.

5°) For any operating condition of the device, the opening rate of said cocks 12 and 13 determines the possibility of increasing or lowering the temperatures due to Joule's action inside the device. As already stated, the branchings 10 and 11 communicate either with a tank for storing hot liquid, or with one or a plurality of heat exchangers for transferring heat.

The various components may be made in various embodiments and according to the requirements.

From the above-described operating positions of the various cocks, there may be deduced that with the pump at rest, no liquid is sucked from the tank 3. Due to the low liquid level inside the cylinder - shaped body 1, the device has a low efficiency or absolutely no throughput. The wind-turbine starts thereby easily as the liquid being present will exert no braking action. With a higher wind speed, the pump 14 sucks more liquid which rises inside the cylinder-shaped-body 1. Rising of the liquid level inside said cylinder shaped body 1 is controlled by acting on said cocks 6 and 7.

With too-high wind speeds, the liquid rises up to above said second set formed by stator 19, rotor 20 and plate 21, which means increasing the energy taken off from the wind-turbine. Said wind-turbine is thus slowed-down due to braking. The water brake formed by the device slows down, while the level of the liquid falls below the rotor 20, which causes the wind-turbine to run faster again. It is thus clear that by suitably selecting the action of the cocks 6 and 7 for a given wind speed, a pre-determined power take-off may be selected while the wind-turbine proper undergoes a self-regulating action.

In combination with the auto-regulating action of the device. according to the invention, there should further be noticed the following considerations.

1. The lowermost rotor 16 and stator 15 have to be so sized as to absorb together with the pump, for any wind speed, no more than $\pm$ 95% of the energy provided by the wind-turbine.

2. The braking provided by the rotor 19 and stator 20 slows down the revolution speed of the wind-turbine in such a way that the aerodynamic efficiency thereof is severely impeded.

It should further be noted that the efficiency of the device or water brake is notably a function of :

a. the spacing between stator and rotor which should preferably reach 12 mm;

b. the third power of the rotor revolution speed, and

c. the fifth power of the rotor diameter.

It must be understood that the invention is in no way limited to the above embodiments and that many changes may be brought thereto without departing from the scope of the invention as defined by the appended claims.

For instance a water tank with a very large volume may be connected between said branchings 10 and 11, which tank can absorb for steam generating the heat being generated inside the cylinder-shaped body 1, in all conditions and without any danger. On this tank or on the branching 10 may be provided a thermostatic control which can act on the position of said cocks 6 and 7, as well as on the braking or the moving away from the wind of the wind-turbine.

Finally there should be noticed that when, contrary to what is shown in the figure, the rotor 16 lies below the stator 15, said plate 18 then bears the rotor 16 and pump 14. Said plate 18 is then a moving (rotating) part of the pump housing.

CLAIMS.

1. Device for producing heat energy and simultaneously auto-regulating the speed of a windmill or wind-turbine, which comprises a water brake or hydraulic brake which is mounted on the rotating shaft of a wind-turbine or windmill, which brake is comprised of a cylinder-shaped body (1), at least one rotor (16) mounted on said shaft (2), and a stator (15) mounted about said rotating shaft (2) next to said rotor (16), an amount of liquid inside said cylinder-shaped body (1) which lies approximately level with the rotor (16), a pump (14) on said rotating shaft (2) remaining immerged in said liquid, an adjustable inlet (4) from a liquid tank (3) for said liquid, to the cylinder-shaped body (1), and an adjustable outlet (5) for said liquid to said tank (3), in such a way that said rotor (16) and stator (15) lie between said inlet (4) and oulet (5), and finally two branches (10,11) on said cylinder-shaped body (1) to lead the heated liquid to at least one heat exchanger and return the cooled liquid to the cylinder-shaped body (1).

2. Device as defined in claim 1, in which said rotor (16) lies above said stator (15).

3. Device as defined in claim 1, in which said rotor (16) lies below said stator (15).

4. Device as defined in any one of claims 1-3, in which said stator (15) bears on a plate (18) which forms the top part from the pump housing, which plate (18) has along the circumference thereof openings (18') for the passage of the circulating liquid.

5. Device as defined in any one of claims 1-4, in which on said rotating shaft (2) is provided a second rotor (20), and a second stator (19) cooperates with a second plate (21) which is connected to said second rotor (20).

6. Device as defined in claim 5, in which said second plate (21) lies above said second rotor (20) and second stator (19).

7. Device as defined in any one of claims 1-6, in which said rotor or rotors (16,20) are each formed by a series of L sections arranged at right angle to said rotating shaft (2), whereby the horizontal flange of each section lies after the vertical flange thereof, as considered in the rotor (16,20) revolution direction.

8. Device as defined in any one of claims 1-7, in which said rotors and stators are always directed with the upstanding flanges of the L sections comprising same facing one another.

9. Device as defined in any one of claims 1-8, in which the diameter of said second rotor (19) is larger than the diameter of said first rotor (16).

10. Device as defined in any one of claims 1-9, in which inside the uppermost part from said cylinder-shaped body (1) is provided a return line (8).

11. Device as defined in any one of claims 1-10, in which inside the uppermost part from said cylinder-shaped body (1) is provided a venting channel (9).

12. Device as defined in any one of claims 1-11, in which between both said branchings (10,11) is connected a water tank which can absorb for generating steam the heat being generated inside said cylinder-shaped body (1), in all conditions and without any danger.

13. Device as defined in claim 12, in which on said tank  is fitted a thermostatic control which can act on the positions of the inlet and outlet cocks (6,7), and cause the braking or the moving away from the wind of the wind-turbine.

0097635